(19) **Europäisches Patentamt / European Patent Office / Office européen des brevets**

(11) **EP 4 585 653 A1**

(12) **EUROPEAN PATENT APPLICATION**
published in accordance with Art. 153(4) EPC

(43) Date of publication:
16.07.2025 Bulletin 2025/29

(21) Application number: 23863073.5

(22) Date of filing: 31.08.2023

(51) International Patent Classification (IPC):
C08L 101/00 (2006.01)    C08J 3/22 (2006.01)
C08K 3/04 (2006.01)    C08K 7/14 (2006.01)
C08L 23/00 (2006.01)    C08L 67/00 (2006.01)
C08L 77/00 (2006.01)

(52) Cooperative Patent Classification (CPC):
C08J 3/22; C08K 3/04; C08K 7/14; C08L 23/00;
C08L 67/00; C08L 77/00; C08L 101/00

(86) International application number:
PCT/JP2023/031681

(87) International publication number:
WO 2024/053535 (14.03.2024 Gazette 2024/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.09.2022 JP 2022143010

(71) Applicant: DIC Corporation
Tokyo 174-8520 (JP)

(72) Inventors:
• SUZUKI, Toru
Ichihara-shi, Chiba 290-8585 (JP)
• MIZUTANI, Shoma
Ichihara-shi, Chiba 290-8585 (JP)

(74) Representative: TBK
Bavariaring 4-6
80336 München (DE)

(54) **CONDUCTIVE RESIN COMPOSITION, MASTER BATCH, MOLDED BODY, AND PRODUCTION METHODS THEREFOR**

(57)    Provided are a molded body having a high electromagnetic wave shielding property or conductivity without deteriorating mechanical physical properties, a conductive resin composition that provides the molded body, a master batch, and production methods therefor. In particular, provided are a conductive resin composition in which a thermoplastic resin and a carbon nanostructure are melt-kneaded as essential raw materials, the carbon nanostructure is obtained by binding a carbon nanotube and a glass fiber through a binding resin, and an amount of the carbon nanostructure is 0.1 to 30 parts by mass with respect to 100 parts by mass of the thermoplastic resin, a master batch capable of providing the conductive resin composition, and production methods therefor.

EP 4 585 653 A1

## Description

Technical Field

The present invention relates to a conductive resin composition, a master batch, a molded body, and production methods therefor.

Background Art

5G communication technology and a millimeter wave radar have spread, whereas the suppression of high-frequency noise has been investigated. As a high-frequency shielding material, a molding material is sometimes used for a casing for an electrical body and a sheet. However, there are problems in that a magnetic metal compound such as ferrite is difficult to have a high-frequency electromagnetic wave shielding property, the addition of a high concentration of a carbon black compound is required for exertion of an electromagnetic wave shielding property, and mechanical physical properties such as impact resistance are reduced.

Accordingly, there is a desire for the utilization of carbon nanotubes capable of exerting a high electromagnetic wave shielding property without deteriorating mechanical physical properties, while there is a problem in that the carbon nanotubes are difficult to disperse at the time of kneading with a resin material and are difficult to achieve an assumed electromagnetic wave shielding property.

Citation List

Patent Literature

PTL 1: Japanese Unexamined Patent Application Publication No. 2016-108524

Summary of Invention

Technical Problem

An object of the present invention is to provide a molded body having a high electromagnetic wave shielding property or conductivity without deteriorating mechanical physical properties, a conductive resin composition that provides the molded body, a master batch, and production methods therefor.

Solution to Problem

A conductive resin composition, a master batch, a molded body, and production methods therefor according to the present invention are [1] to [9] described below.

[1] A conductive resin composition, the conductive resin composition being obtained by melt-kneading a thermoplastic resin and a carbon nanostructure as essential raw materials, in which

the carbon nanostructure is obtained by binding a carbon nanotube and a glass fiber through a binding resin, and
an amount of the carbon nanostructure is 0.1 to 30 parts by mass with respect to 100 parts by mass of the thermoplastic resin.

[2] The conductive resin composition according to [1], in which the carbon nanostructure has a crosslinking structure formed by binding the carbon nanotube and the glass fiber through the binding resin.

[3] The conductive resin composition according to [1] or [2], in which

the conductive resin composition is a master batch, and
the amount of the carbon nanostructure is 1 to 30 parts by mass with respect to 100 parts by mass of the thermoplastic resin.

[4] The conductive resin composition according to any one of [1] to [3], in which the thermoplastic resin includes at least one selected from the group consisting of a polyamide-based resin, a polyethylene-based resin, a polypropylene-based resin, and a polyphenylene-based resin.

[5] A molded body, the molded body being obtained by molding the conductive resin composition according to any one of [1] to [4].

[6] The molded body according to [5], in which the molded body is a conductive material or an electromagnetic wave shielding material.

[7] A production method for a conductive resin composition, the production method including:

a step of melt-kneading a thermoplastic resin and a carbon nanostructure, in which
the carbon nanostructure is obtained by binding a carbon nanotube and a glass fiber through a binding resin, and
an amount of the carbon nanostructure is 0.1 to 30 parts by mass with respect to 100 parts by mass of the thermoplastic resin.

[8] A production method for a conductive resin composition, the production method including:

a step of melt-kneading a thermoplastic resin and a carbon nanostructure in an amount of 0.1 to 30 parts by mass with respect to 100 parts by mass of the thermoplastic resin, to produce a master batch; and
a step of melt-kneading the produced master batch and a thermoplastic resin.

[9] A production method for a molded body, the production method including:

a step of melt-molding a conductive resin composition containing a thermoplastic resin and a carbon nanostructure, in which
the carbon nanostructure is obtained by binding a carbon nanotube and a glass fiber through a binding resin, and
an amount of the carbon nanostructure is 0.1 to 30 parts by mass with respect to 100 parts by mass of the thermoplastic resin.

Advantageous Effects of Invention

According to the present invention, a molded body having a high electromagnetic wave shielding property or conductivity without deteriorating mechanical physical properties, a conductive resin composition that provides the molded body, a master batch, and production methods therefor can be provided.

Brief Description of Drawings

FIG. 1 is a Raman spectrum diagram (excitation wavelength: 633 nm) of fillers used in Examples 1 to 6.
FIG. 2 is a Raman spectrum diagram (excitation wavelength: 785 nm) of the fillers used in Examples 1 to 6. Description of Embodiments

Hereinafter, preferred embodiments of the present invention will be described. The term "X to Y" as used herein means "X or more and Y or less". Herein, operation and measurement of physical properties and the like are performed under conditions of room temperature (20 to 25°C)/relative humidity of 40 to 50% RH unless otherwise noted.

A conductive resin composition of the present invention is obtained by melt-kneading a thermoplastic resin and a carbon nanostructure as essential raw materials, the carbon nanostructure is obtained by binding a carbon nanotube and a glass fiber through a binding resin, and the amount of the carbon nanostructure is 0.1 to 30 parts by mass with respect to 100 parts by mass of the thermoplastic resin.

Thermoplastic Resin

The thermoplastic resin used in the present invention may be appropriately selected from publicly known resins and used without particular restriction in consideration of the kind of a carbon nanostructure to be blended and a product quality required in the formation of a molded body. One kind of the thermoplastic resin used in the present invention may be used alone, or two or more kinds thereof may be mixed and used. When two or more kinds thereof are mixed, it is preferable that highly compatible resins be used in combination. In addition, a commercially available product may be used or a synthetic product may be used as the thermoplastic resin.

Specific examples of the thermoplastic resin used in the present invention include polyolefin-based resins such as a polyethylene, a polypropylene, a poly(4-methyl-1-pentene), and a poly(1-butene); polyester-based resins such as polyethylene terephthalate, polybutylene terephthalate, and polyethylene naphthalate; polyamide-based resins such as polyamide-6 (nylon-6), polyamide-66 (nylon-66), and polymethaxylene adipamide; ethylene-unsaturated ester-based copolymers such as an ethylene-vinyl ester copolymer and an ethylene-unsaturated carboxylic acid ester copolymer; an ethylene-unsaturated carboxylic acid-based copolymer or an ionomer resin thereof; poly(meth)acrylic resins such as a poly(meth)acrylic acid ester resin; chlorine-containing resins such as a polyvinyl chloride and a polyvinylidene chloride; fluorine-containing resins such as polytetrafluoroethylene, an ethylene-tetrafluoroethylene copolymer, polyvinylidene fluoride, and polyvinyl fluoride; a polystyrene resin; polyether-based resins such as a polyetherether ketone resin and a polyether ketone resin; a polycarbonate resin; polyphenylene-based resins such as a polyphenylene oxide resin and a polyarylene sulfide resin typified by a polyphenylene sulfide resin; a polyvinyl acetate resin; a polyacrylonitrile resin; and a thermoplastic elastomer. Among these, a polyolefin-based resin, a polyester-based resin, a polyamide-based resin, and a polyolefin-based resin are preferred. One kind selected from these thermoplastic resins may be used alone, or two or more kinds thereof may be used in combination.

A polyolefin-based resin is a polyolefin resin obtained by polymerizing at least one kind of olefin, and may be a homopolymer or a copolymer.

Examples of such an olefin include $\alpha$-olefins having 4 to 12 carbon atoms such as ethylene, propylene, isobutylene, and isobutene (1-butene); butadiene, isoprene, a (meth)acrylic acid ester, (meth)acrylic acid, (meth) acrylamide, vinyl alcohol, vinyl acetate, vinyl chloride, styrene, and acrylonitrile.

Examples of an $\alpha$-olefin having 4 to 12 carbon atoms include 1-butene, 2-methyl-1-propene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, and 1-dodecene.

Examples of a polyolefin-based resin include a polyethylene resin, a polypropylene resin, a polyisobutylene resin, a polyisobutene resin, a polyisoprene resin, and a polybutadiene resin. Among the resins, a polyethylene resin and a polypropylene resin are preferred. Under classification based on a density or a shape, examples thereof include a high-density polyethylene (HDPE), a low-density polyethylene (LDPE), a very-low-density polyethylene (VLDPE), a linear low-density polyethylene (LLDPE), and an ultrahigh-molecular-weight polyethylene (UHMW-PE). Among these, a high-density polyethylene is preferred.

Carbon Nanostructure

The carbon nanostructure used in the present invention is obtained by binding a carbon nanotube and a glass fiber through a binding resin. The carbon nanostructure is obtained by binding a carbon nanotube and a glass fiber through a binding resin, and preferably has a network structure. The carbon nanostructure is obtained by binding a carbon nanotube and a glass fiber through a binding resin, and preferably forms a branched structure, a structure in which the carbon nanotube and the glass fiber are incorporated into each other, a structure in which the carbon nanotube and the glass fiber are entangled with each other, or a crosslinking structure. The structure may be a dendrimer structure. Of the ratios of the carbon nanotube, the glass fiber, and the binding resin, the ratio of the carbon nanotube is preferably 70 to 98 mass%, the ratio of the glass fiber is preferably 1 to 15 mass%, and the ratio of the binding resin is preferably 1 to 15 mass%, with respect to the sum of the carbon nanotube, the glass fiber, and the binding resin.

As the carbon nanotube, a single-walled carbon nanotube (SWCNT) having an average diameter of 5 to 100 nanometers (nm) or a multi-walled carbon nanotube (MWCNT) in which many layers (two or more layers) of the single carbon nanotube are connected may be used.

The glass fiber may be fine powder obtained by melting a glass composition component containing as a main component silicon dioxide ($SiO_2$) followed by cooling. Examples thereof include powder of glass such as glass powder (e.g., glass powder represented by CAS 65997-17-3, and a product based on Japanese Standards of Quasi-drug Ingredients).

The carbon nanostructure used in the present invention is preferably a composite containing a carbon nanotube (CNT) having a G/D ratio at an excitation wavelength of 633 nm of 0.5 to 1.0 and/or a G/D ratio at an excitation wavelength of 785 nm of 0.1 to 0.5, which are measured by Raman spectrum measurement, and the glass powder. The terms "G" and "D" are peak heights appearing at about 1,586 $cm^{-1}$ and about 1,367 $cm^{-1}$, respectively, when excitation is generated at the excitation wavelengths in the Raman spectrum measurement.

A publicly known substance may be used as the binding resin as long as it is used as a sizing agent for a carbon fiber and a glass fiber. Specific examples thereof include, but not limited to, fluorinated polymers such as poly(vinyl difluoroethylene) (PVDF), poly(vinyl difluoroethylene-co-hexafluoropropylene) (PVDF-HFP), and poly(tetrafluoroethylene) (PTFE); a polyimide, and watersoluble resins such as a polyethylene oxide, polyvinylalcohol (PVA), cellulose, carboxymethylcellulose (CMC), starch, hydroxypropyl cellulose, regenerated cellulose, and polyvinylpyrrolidone (PVP), and copolymers and mixtures thereof; a polyurethane (PU), a thermoplastic polyurethane (TPU), a polyethylene glycol (PEG), an epoxy resin, a polyester resin, a vinyl ester resin, a polyetherimide resin, a polyether ketone ketone resin, a polyphthalamide resin, a polyether ketone resin, a polyetherether ketone resin, a polyimide resin, a phenol-formaldehyde resin, a bismaleimide resin, an acrylonitrile-butadienestyrene (ABS) resin, a polycarbonate resin, a polyethyleneimine resin, a polyvinyl chloride resin, a polystyrene resin, a polyolefin resin, a polypropylene resin, a polyethylene resin, a polytetrafluoroethylene resin, an elastomer, for example, a polyisoprene, a polybutadiene, a butyl rubber, a nitrile rubber, an ethylene-vinyl acetate polymer, a silicone polymer, and a fluorosilicone polymer, and combinations thereof.

A commercially available product may be used as such a carbon nanostructure, and examples thereof include "ATHLOS (TM) 100 Carbon Nanostructure Pellets" (Cabot Corporation).

As the ratio between the thermoplastic resin and the carbon nanostructure, the amount of the carbon nanostructure is preferably 0.1 to 30 parts by mass, more preferably 1 to 15 parts by mass, with respect to 100 parts by mass of the thermoplastic resin.

In addition to the above-mentioned essential components, a publicly known additive and the like may be blended as another component in the conductive resin composition of the present invention. Specific examples thereof include an antioxidant, an ultraviolet absorber, a colorant, a pigment, a dye, a foaming agent, a lubricant, a flame retardant, and a filling material (in the present invention, referred to as an additive and the like). When the other component is used as an optional component, the blending ratio of the other component may be within a range that does not impair the effects of the present invention, and an intended function can be freely adjusted by adjusting the kinds and amounts of the components. For example, the used blending ratio may be within the range of 10 parts by mass or less, within the range of 5 parts by mass or less, or within the rang of 1 part by mass or less, with respect to 100 parts by mass of the thermoplastic resin.

A production method for the conductive resin composition according to the present invention includes a step of melt-kneading the thermoplastic resin and the carbon nanostructure as essential raw materials. A kneaded mixture obtained in the step may be directly melt-molded to form a molded body, or may be once deformed into powder, granules, or pellet-shape or chip-shaped granules and then melt-molded to form a molded body.

The step of melt-kneading the thermoplastic resin and the carbon nanostructure as essential raw materials may include: first blending at least the thermoplastic resin and the carbon nanostructure as essential blending components at the above-mentioned ratio, further blending a publicly known additive and the like, as required, uniformly mixing the mixture with a tumbler or a Henschel mixer (registered trademark), as required, subsequently placing the mixture to a melt-kneading extruder such as a twin-screw kneading extruder, and melt-kneading the mixture at a temperature range of the melting temperature or more of the thermoplastic resin or the temperature plus 100°C, for example, at a temperature range of 180°C or more and 300°C or less. Thus, a morphology in which the thermoplastic resin forms a continuous phase and the carbon nanostructure or a pulverized product thereof is dispersed can be formed. The melting temperature of the thermoplastic resin represents a melting point for a crystalline resin or a softening point (glass transition point) for an amorphous resin (hereinafter the same applies).

When the kneaded mixture is molded into particles once, for example, the kneaded mixture can be extruded in a strand shape, left at room temperature or immersed in water at a temperature range of 5°C or more and 60°C or less for cooling, and cut to obtain particles having a pellet shape, a chip shape, or the like. After that, the resultant particles can be frozen and ground as required, to obtain powder or granules each having a desired size.

It is preferable that the conductive resin composition of the present invention be produced through a master batch.

A master batch of the present invention is obtained by melt-kneading a thermoplastic resin and a carbon nanostructure as essential raw materials, and the amount of the carbon nanostructure is 1 to 30 parts by mass with respect to 100 parts by mass of the thermoplastic resin.

The thermoplastic resin and the carbon nanostructure are the same as described above, and a production method for a master batch is also the same as described above except that the blending ratio of the carbon nanostructure with respect to the thermoplastic resin is different.

When the conductive resin composition of the present invention is produced through the master batch, the production method for a conductive resin composition of the present invention further includes a step of melting the resultant master batch and a thermoplastic resin as a resin for dilution, followed by mixing or kneading.

Examples of the thermoplastic resin used as the resin for dilution are the same as described above, but a resin different from the thermoplastic resin used in the production of the master batch may be used, or the same kind of resin may be used.

The blending ratio of the resin for dilution with respect to the master batch can be adjusted so that the amount of the carbon nanostructure is finally 1 to 30 parts by mass with respect to 100 parts by mass of the thermoplastic resin in the conductive resin composition.

When the conductive resin composition is thus produced through the master batch and a molded body is then produced, the carbon nanostructure or a pulverized material thereof can be more uniformly dispersed, and as a result, desired function and characteristics can be sufficiently imparted to the molded body.

Molded Body

A molded body that is excellent in conductivity and an electromagnetic wave shielding property is obtained by molding the conductive resin composition according to the present invention. That is, according to another embodiment of the present invention, a molded body obtained from the conductive resin composition according to the present invention is provided.

A molding method for the molded body is not particularly limited, and examples thereof include a casting method such as casting, and melt-molding methods such as injection-molding and compression-molding using a die, and extrusion-molding and blow-molding using a T die.

In the production of the molded body, the molded body may be formed only from the resin composition according to the present invention, or the resin composition according to the present invention and another resin composition may be used as raw materials. For example, the whole molded body may be molded from the resin composition according to the present invention, or only part of the molded body may be molded from the resin composition according to the present invention.

The molded body molded by subjecting the conductive resin composition of the present invention to melt-molding or the like forms a morphology in which the carbon nanostructure or the pulverized material thereof is dispersed in the thermoplastic resin that forms a continuous phase. Accordingly, the molded body is excellent in conductivity and an electromagnetic wave shielding property. For example, the molded body of the present invention may have an electrical conductivity of $10^8$ to $10^{-1}$ $\Omega$/sq. Furthermore, the molded body of the present invention is excellent in an electromagnetic wave shielding property. For example, even when the ratio of the carbon nanostructure is 0.1 to 1.0 part by mass with respect to 100 parts by mass of the thermoplastic resin, the molded body has an electromagnetic wave shielding property at what is called a millimeter wave range (100 MHz to 90 GHz band).

Accordingly, a molded product of the present invention is particularly suitable for a casing for an OA apparatus and a casing for electric and electronic apparatuses. Examples of an applied apparatus include a laptop, a personal organizer, a mobile phone, and a PDA, and an application in which the electromagnetic wave shielding property as the feature of the present invention is the most effective is a casing for a laptop.

[Examples]

The present invention will be described in detail using the following Examples and Comparative Examples. However, the technical scope of the present invention is not limited only to the following Examples. In the following Examples, the terms "%" and "part" are used, but the terms "%" and "part" represent "mass%" and "part by mass", respectively, unless otherwise specified.

[Examples 1 and 2 and Comparative Examples 1 and 2]

At a composition and a ratio indicated in Table, a filler and a polymer were melt-kneaded with a twin-screw extruder TEM-26SX (manufactured by Shibaura Machine Co., Ltd.) (cylinder temperature: 220°C (PP) or 260°C (PBT), screw rotation speed: 300 rpm, discharge amount: 10 kg/hr), to obtain a resin composition. The obtained resin composition was subjected to evaluations as described below. The results are shown in Table 1.

(Electrical Conductivity)

The obtained resin composition was dried for 5 hours in a geer oven at 80°C for the PP-based resin composition and 120°C for the PBT-based resin composition, the sample was placed in a die, a pressure of 2 MPa was applied with a heating press, heat was left for 5 minutes at 240°C for the PP-based resin composition and 280°C for the PBT-based resin composition, the sample was then pressed under the application of a pressure of 20 MPa for 2 minutes, cold-pressed, and cooled to room temperature, and the test specimen was taken out to produce a flat plate of 2 mm in thickness and 150 mm in side length. After that, the central part of the plate was cut in a square of 60 mm × 60 mm, to make a test specimen. For this test specimen, the surface resistivity was measured with a super high resistance meter R8340A manufactured by Advantest Corporation by a method in accordance with JIS K 6723.

(Electromagnetic Wave Shielding Property)

The 150-mm square plate obtained in the foregoing was subjected to measurement at a region of a frequency of 0.1 MHz to 1 GHz by a KEC method, and two regions of frequencies of 26.5 to 40 GHz and 60 to 90 GHz by a free space method. In the free space method, S-parameters (S21, S11) were measured with two pairs of lens antennae that were horizontally arranged through use of a vector network analyzer, and a shielding property and an absorption property were calculated on the basis of electrical power as described below.

S21 = (electromagnetic field strength of transmitted wave/electromagnetic field strength of incident wave) S11 = (electromagnetic field strength of reflective wave/electromagnetic field strength of incident wave)

$$\mathrm{Shielding\ property\ (dB)\ =\ 10\ \times\ log_{10}(S21^2)}$$

$$\mathrm{Reflectivity\ (\%)\ =\ 100\ \times\ S11^2}$$

$$\mathrm{Transmittance\ (\%)\ =\ 100\ \times\ S21^2}$$

$$\mathrm{Absorptivity\ (\%)\ =\ 100\ -\ reflectivity\ -\ transmittance}$$

(Mechanical Physical Properties)

The obtained resin composition was dried for 5 hours in a geer oven at 80°C for the PP-based resin composition or 120°C for the PBT-based resin composition, injection-molded with an injection molding apparatus at a cylinder temperature of 230°C for PP or a cylinder temperature of 270°C for PBT to form a type A multipurpose test specimen of JIS K 7139, and the test specimen was cut to produce a notch type A test specimen of type 1 defined in JIS K 7111. A Charpy impact strength was measured at a measurement temperature of 23°C by a method in accordance with JIS K 7111.

[Table 1]

| | | Example 1 | Example 2 | Comparative Example 1 | Comparative Example 2 |
|---|---|---|---|---|---|
| Filler | Athlos100 | 15 | 10 | - | - |
| | NC7000 | - | - | 15 | 10 |
| Polymer | PP | 85 | - | 85 | - |
| | PBT | - | 90 | - | 90 |
| Surface resistivity ($\Omega$/sq) | | $4.6 \times 10^{-1}$ | $3.2 \times 10^{-1}$ | $8.7 \times 10^1$ | $6.5 \times 10^1$ |
| Electric field (dB) at 1 GHz by KEC method | | -60 | -60 | -40 | -40 |
| Magnetic field (dB) at 1 GHz by KEC method | | -40 | -40 | -20 | -20 |
| Shielding property (dB) at 30 GHz by free space method | | -77 | -79 | -39 | -40 |
| Shielding property (dB) at 70 GHz by free space method | | -89 | -88 | -40 | -41 |
| Absorptivity (%) at 30 GHz by free space method | | 13 | 17 | 11 | 12 |
| Absorptivity (%) at 70 GHz by free space method | | 16 | 15 | 14 | 14 |
| Charpy impact strength (kJ/m$^2$) | | 2.0 | 2.8 | 1.8 | 2.5 |

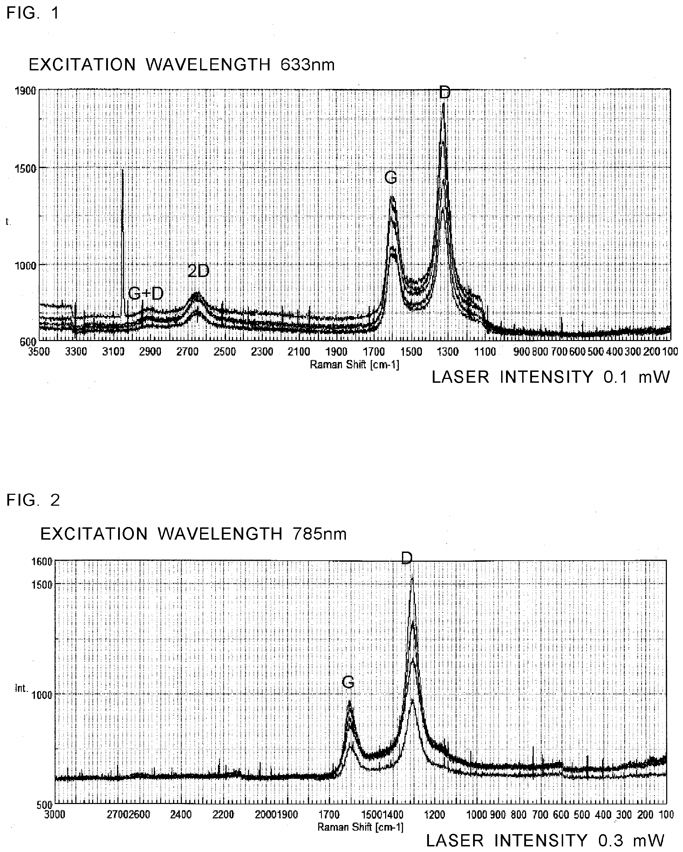

As raw materials in Tables, the followings were used.
"Athlos100": carbon nanostructure "ATHLOS (TM) 100 Carbon Nanostructure Pellets" (Cabot Corporation) Raman spectra were shown in FIGS. 1 and 2. The Raman spectra were measured by the following method.
"NC7000": multi-walled carbon nanotube (manufactured by Nanocyl SA)
"PP": polypropylene resin (random polypropylene having an MFR at 230°C and 2.16 kg of 5 to 10 g/10 min)
"PBT": polybutylene terephthalate (having an MFR at 240°C and 2.16 kg of 60 to 80 g/10 min)

As the MFR, the melt flow rate was measured by loading a melt indexer (orifice diameter: 2.1 mm), applying the above-mentioned load, and preheating for 5 minutes.

Comparison between Example 1 and Comparative Example 1 reveals that while the impact resistance was held or improved, the resin composition in Example 1 had a lower surface resistivity and was more excellent in conductivity and shielding performance of electromagnetic wave with 1 GHz to 70 GHz than those in Comparative Example 1. In addition, comparison between Example 2 and Comparative Example 2 reveals that while the impact resistance was held or improved, the resin composition in Example 2 had a lower surface resistivity and was more excellent in conductivity and shielding performance of electromagnetic wave with 1 GHz to 70 GHz than those in Comparative Example 2.

[Examples 3 and 4 and Comparative Examples 3 and 4]

At a composition and a ratio indicated in Table, a filler and a polymer were melt-kneaded with a twin-screw extruder TEM-26SX (manufactured by Shibaura Machine Co., Ltd.) (cylinder temperature: 220°C (PP) or 260°C (PBT), screw rotation speed: 300 rpm, discharge amount: 10 kg/hr), to obtain a resin composition. The obtained resin composition was subjected to evaluations as described above. The results are shown in Tables 2 and 3.

[Examples 5 and 6 and Comparative Examples 5 and 6]

The resin composition obtained in each of Example 1 and Comparative Example 1 serving as a master batch was diluted by blending polymers so that the ratio of the filler in the master batch was finally a ratio indicated in Tables 2 and 3, and the mixture was melt-kneaded with a twin-screw extruder TEM-26SX (manufactured by Shibaura Machine Co., Ltd.) (cylinder temperature: 220°C (PP) or 260°C (PBT), screw rotation speed: 300 rpm, discharge amount: 10 kg/hr), to obtain a resin composition. The obtained resin composition was subjected to evaluations as described above. The results are shown in Tables 2 and 3.

[Table 2]

| | | Example 3 | Example 4 | Example 5 | Example 6 |
|---|---|---|---|---|---|
| Filler | Athlos100 | 1 | 3 | 1 | 3 |
| | NC7000 | - | - | - | - |
| Polymer | PP | 99 | 97 | 99 | 97 |
| | PBT | - | - | - | - |
| Surface resistivity ($\Omega$/sq) | | $6.7 \times 10^6$ | $1.7 \times 10^5$ | $5.4 \times 10^6$ | $2.2 \times 10^5$ |
| Electric field (dB) at 1 GHz by KEC method | | - | - | - | - |
| Magnetic field (dB) at 1 GHz by KEC method | | - | - | - | - |
| Shielding property (dB) at 30 GHz by free space method | | -23 | -43 | -25 | -41 |
| Shielding property (dB) at 70 GHz by free space method | | -26 | -56 | -26 | -55 |
| Absorptivity (%) at 30 GHz by free space method | | 61 | 33 | 60 | 31 |
| Absorptivity (%) at 70 GHz by free space method | | 63 | 35 | 64 | 34 |
| Charpy impact strength (kJ/m$^2$) | | 3.8 | 3.5 | 3.7 | 3.5 |

[Table 3]

| | | Comparative Example 3 | Comparative Example 4 | Comparative Example 5 | Comparative Example 6 |
|---|---|---|---|---|---|
| Filler | Athlos100 | - | - | - | - |
| | NC7000 | 1 | 3 | 1 | 3 |
| Polymer | PP | 99 | 97 | 99 | 97 |
| | PBT | - | - | - | - |
| Surface resistivity ($\Omega$/sq) | | $3.8 \times 1011$ | $4.5 \times 10^8$ | $2.8 \times 10^{11}$ | $7.2 \times 10^8$ |

# EP 4 585 653 A1

(continued)

|  | Comparative Example 3 | Comparative Example 4 | Comparative Example 5 | Comparative Example 6 |
|---|---|---|---|---|
| Electric field (dB) at 1 GHz by KEC method | - | - | - | - |
| Magnetic field (dB) at 1 GHz by KEC method | - | - | - | - |
| Shielding property (dB) at 30 GHz by free space method | -4 | -10 | -3 | -11 |
| Shielding property (dB) at 70 GHz by free space method | -4 | -12 | -4 | -14 |
| Absorptivity (%) at 30 GHz by free space method | 15 | 20 | 18 | 22 |
| Absorptivity (%) at 70 GHz by free space method | 18 | 21 | 20 | 25 |
| Charpy impact strength (kJ/m$^2$) | 3.6 | 3.4 | 3.7 | 3.3 |

Comparison between Example 3 and Comparative Example 3 reveals that while the impact resistance was held or improved, the resin composition in Example 3 had a lower surface resistivity and was more excellent in conductivity and shielding performance and absorption performance of electromagnetic wave with 1 GHz to 70 GHz than those in Comparative Example 3. Comparison between Example 4 and Comparative Example 4 reveals that while the impact resistance was held or improved, the resin composition in Example 4 had a lower surface resistivity and was more excellent in conductivity and shielding performance and absorption performance of electromagnetic wave with 1 GHz to 70 GHz than those in Comparative Example 4. Comparison between Example 5 and Comparative Example 5 reveals that while the impact resistance was held or improved, the resin composition in Example 5 had a lower surface resistivity and was more excellent in conductivity and shielding performance and absorption performance of electromagnetic wave with 1 GHz to 70 GHz than those in Comparative Example 5. Comparison between Example 6 and Comparative Example 6 reveals that while the impact resistance was held or improved, the resin composition in Example 6 had a lower surface resistivity and was more excellent in conductivity and shielding performance and absorption performance of electromagnetic wave with 1 GHz to 70 GHz than those in Comparative Example 6.

In addition, the results of Examples 3 and 4 and Examples 5 and 6 reveal that even when a compound was directly formed or the master batch was used in dilution, the same performances were exerted. As compared to Example 1, in Examples 3 to 6, the electromagnetic wave shielding performance was reduced, but the electromagnetic wave absorption performance was improved. Accordingly, it was obvious that the resin compositions in Examples 3 to 6 were suitable for an application requiring a reduction of reflective noise.

(Measurement and Result of Raman Spectrum)

A sample (Athlos100) was collected on a glass slide, and subjected to Raman analysis (n=5).

Raman apparatus: NRS5500 (manufactured by JASCO Corporation) excitation wavelength: 633 nm and 785 nm
Grating: 600 lines
Exposure time: 100 seconds
Integration count: 2 times
Wavenumber correction was performed with crystalline Si (520 cm$^{-1}$).
Peak heights of G (1,586 cm$^{-1}$) and D (1,367 cm$^{-1}$) were determined, and a G/D ratio was calculated (Table 4).

[Table 4]

| Excitation wavelength: 633 nm | | G | D | G/D |
|---|---|---|---|---|
| Peak height | First time | 615 | 1116 | 0.6 |
| | Second time | 569 | 961 | 0.6 |
| | Third time | 678 | 1163 | 0.6 |
| | Fourth time | 427 | 778 | 0.6 |
| | Fifth time | 399 | 652 | 0.6 |

| Excitation wavelength: 785 nm | | G | D | G/D |
|---|---|---|---|---|
| Peak height | First time | 312 | 895 | 0.3 |
| | Second time | 221 | 501 | 0.4 |
| | Third time | 260 | 674 | 0.4 |
| | Fourth time | 138 | 345 | 0.4 |
| | Fifth time | 294 | 685 | 0.4 |

[Examples 7 to 9]

At a composition and a ratio indicated in Table, a filler and a polymer were melt-kneaded with a twin-screw extruder TEX-25αIII (manufactured by The Japan Steel Works, Ltd.) (cylinder temperature: 300°C, screw rotation speed: 200 rpm, discharge amount: 15 kg/hr), to obtain a resin composition. The obtained resin composition was subjected to evaluations as described below. The results are indicated in Table 5.

(Electrical Conductivity)

The obtained resin composition was dried in a geer oven at 140°C for 2 hours, and a test specimen of 100 mm $\times$ 100 mm $\times$ 2 mm was produced with an injection molding apparatus at a cylinder temperature of 320 to 330°C. For this test specimen, the surface resistivity was measured in the same manner as described above.

(Electromagnetic Wave Shielding Property)

For the 100-mm square plate obtained in the foregoing, an electromagnetic wave shielding property was measured and calculated in the same manner as described above.

(Mechanical Physical Properties)

The 100-mm square plate obtained in the foregoing was cut in a material flowing direction to produce a test specimen of 10 mm $\times$ 80 mm, and a Charpy impact strength was measured at a measurement temperature of 23°C by a method in accordance with JIS K 7111.

[Table 5]

| | | Example 7 | Example 8 | Example 9 |
|---|---|---|---|---|
| Filler | Athlos100 | 1 | 3 | 10 |
| Polymer | PPS | 99 | 97 | 90 |
| Surface resistivity (Ω/sq) | | 47 | 5.0 | 0.73 |
| Electric field (dB) at 1 GHz by KEC method | | | | |
| Magnetic field (dB) at 1 GHz by KEC method | | | | |
| Shielding property (dB) at 30 GHz by free space method | | 38 | 84 | 94 |
| Shielding property (dB) at 70 GHz by free space method | | 65 | 111 | 75 |

(continued)

|  | Example 7 | Example 8 | Example 9 |
|---|---|---|---|
| Absorptivity (%) at 30 GHz by free space method | 50 | 25 | 14 |
| Absorptivity (%) at 70 GHz by free space method | 47 | 26 | 16 |
| Charpy impact strength (kJ/m$^2$) | 3.4 | 5.3 | 5.9 |

As raw materials in Tables, the followings were used.

"PPS": polyphenylene sulfide resin (melt viscosity at 310°C and a shear speed of 1,000 sec$^{-1}$: 10 to 20 Pa·s)

In Examples 7 to 9, it was obvious that while the impact resistance was held or improved, the resin compositions had a lower surface resistivity and were more excellent in conductivity and shielding performance and absorption performance of electromagnetic wave with 1 GHz to 70 GHz, and mechanical strength.

**Claims**

1. A conductive resin composition, the conductive resin composition being obtained by melt-kneading a thermoplastic resin and a carbon nanostructure as essential raw materials, wherein

    the carbon nanostructure is obtained by binding a carbon nanotube and a glass fiber through a binding resin, and an amount of the carbon nanostructure is 0.1 to 30 parts by mass with respect to 100 parts by mass of the thermoplastic resin.

2. The conductive resin composition according to claim 1, wherein the carbon nanostructure has a crosslinking structure formed by binding the carbon nanotube and the glass fiber through the binding resin.

3. The conductive resin composition according to claim 1, wherein

    the conductive resin composition is a master batch, and
    the amount of the carbon nanostructure is 1 to 30 parts by mass with respect to 100 parts by mass of the thermoplastic resin.

4. The conductive resin composition according to claim 1, wherein the thermoplastic resin includes at least one selected from the group consisting of a polyamide-based resin, a polyolefin-based resin, a polyester-based resin, and a polyphenylene-based resin.

5. A molded body, the molded body being obtained by molding the conductive resin composition according to claim 1.

6. The molded body according to claim 5, wherein the molded body is a conductive material or an electromagnetic wave shielding material.

7. A production method for a conductive resin composition, the production method comprising:

    a step of melt-kneading a thermoplastic resin and a carbon nanostructure, wherein
    the carbon nanostructure is obtained by binding a carbon nanotube and a glass fiber through a binding resin, and
    an amount of the carbon nanostructure is 0.1 to 30 parts by mass with respect to 100 parts by mass of the thermoplastic resin.

8. A production method for a conductive resin composition, the production method comprising:

    a step of melt-kneading a thermoplastic resin and a carbon nanostructure in an amount of 0.1 to 30 parts by mass with respect to 100 parts by mass of the thermoplastic resin, to produce a master batch; and
    a step of melt-kneading the produced master batch and a thermoplastic resin.

9. A production method for a molded body, the production method comprising:

    a step of melt-molding a conductive resin composition containing a thermoplastic resin and a carbon nanostructure, wherein
the carbon nanostructure is obtained by binding a carbon nanotube and a glass fiber through a binding resin, and an amount of the carbon nanostructure is 0.1 to 30 parts by mass with respect to 100 parts by mass of the thermoplastic resin.

FIG. 1

EXCITATION WAVELENGTH 633nm

LASER INTENSITY 0.1 mW

FIG. 2

EXCITATION WAVELENGTH 785nm

LASER INTENSITY 0.3 mW

## INTERNATIONAL SEARCH REPORT

| International application No. |
|---|
| **PCT/JP2023/031681** |

| A. | CLASSIFICATION OF SUBJECT MATTER |
|---|---|

*C08L 101/00*(2006.01)i; *C08J 3/22*(2006.01)i; *C08K 3/04*(2006.01)i; *C08K 7/14*(2006.01)i; *C08L 23/00*(2006.01)i; *C08L 67/00*(2006.01)i; *C08L 77/00*(2006.01)i

FI: C08L101/00; C08K3/04; C08L77/00; C08L67/00; C08K7/14; C08L23/00; C08J3/22

According to International Patent Classification (IPC) or to both national classification and IPC

| B. | FIELDS SEARCHED |
|---|---|

Minimum documentation searched (classification system followed by classification symbols)

C08L1/00-101/14; C08K3/00-13/08; C08J3/00-3/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/004235 A1 (POLYPLASTICS CO., LTD.) 06 January 2022 (2022-01-06) claims 1-2, paragraphs [0005], [0029]-[0031], [0034], [0045]-[0046], [0051], table 1, examples 1-8 | 1-9 |
| X | WO 2022/004236 A1 (POLYPLASTICS CO., LTD.) 06 January 2022 (2022-01-06) claims 1-2, paragraphs [0005], [0029]-[0031], [0039], [0050]-[0051], [0056], table 1, examples 1-11 | 1-9 |
| X | JP 7112804 B1 (UNITIKA LTD) 04 August 2022 (2022-08-04) claims 1, 4, 6, paragraphs [0002]-[0004], [0028], [0037], [0040]-[0041], [0043], [0057]-[0069], table 2, examples 3, 11 | 1-9 |
| A | JP 2013-513020 A (APPLIED NANOSTRUCTURED SOLUTIONS, LLC) 18 April 2013 (2013-04-18) entire text | 1-9 |
| A | WO 2022/181696 A1 (MITSUBISHI ENGINEERING-PLASTICS CORPORATION) 01 September 2022 (2022-09-01) entire text | 1-9 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 October 2023** | **07 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| PCT/JP2023/031681 |

**C.    DOCUMENTS CONSIDERED TO BE RELEVANT**

| Category* | Citation of document, with indication, where appropriate, of the relevant passages | Relevant to claim No. |
|---|---|---|
| A | JP 2012-057082 A (DIC CORP) 22 March 2012 (2012-03-22)<br>entire text | 1-9 |
| A | JP 2017-512847 A (LG CHEM, LTD.) 25 May 2017 (2017-05-25)<br>entire text | 1-9 |

Form PCT/ISA/210 (second sheet) (January 2015)

## INTERNATIONAL SEARCH REPORT
### Information on patent family members

International application No.

**PCT/JP2023/031681**

| Patent document cited in search report | | | Publication date (day/month/year) | Patent family member(s) | | | Publication date (day/month/year) |
|---|---|---|---|---|---|---|---|
| WO | 2022/004235 | A1 | 06 January 2022 | CN | 115885017 | A | |
| WO | 2022/004236 | A1 | 06 January 2022 | CN | 115916905 | A | |
| JP | 7112804 | B1 | 04 August 2022 | WO | 2022/220052 | A1 | |
| | | | | TW | 202307079 | A | |
| JP | 2013-513020 | A | 18 April 2013 | US | 2011/0297892 | A1 | |
| | | | | entire text | | | |
| | | | | WO | 2011/072071 | A1 | |
| | | | | EP | 2509918 | A1 | |
| | | | | CA | 2779709 | A1 | |
| | | | | AU | 2010328139 | A1 | |
| | | | | CN | 102648155 | A | |
| | | | | KR | 10-2012-0124404 | A | |
| | | | | ZA | 201203339 | B | |
| | | | | BR | 112012013904 | A2 | |
| WO | 2022/181696 | A1 | 01 September 2022 | JP | 2022-129846 | A | |
| | | | | JP | 2022-129847 | A | |
| | | | | JP | 2022-130342 | A | |
| | | | | WO | 2022/181697 | A1 | |
| | | | | CN | 115803395 | A | |
| | | | | CN | 115867600 | A | |
| JP | 2012-057082 | A | 22 March 2012 | (Family: none) | | | |
| JP | 2017-512847 | A | 25 May 2017 | US | 2017/0066907 | A1 | |
| | | | | entire text | | | |
| | | | | US | 2019/0023875 | A1 | |
| | | | | WO | 2016/032307 | A1 | |
| | | | | EP | 3187526 | A1 | |
| | | | | KR | 10-2016-0026805 | A | |
| | | | | CN | 106164151 | A | |

Form PCT/ISA/210 (patent family annex) (January 2015)

**REFERENCES CITED IN THE DESCRIPTION**

**Patent documents cited in the description**

- JP 2016108524 A

**Non-patent literature cited in the description**

- *CHEMICAL ABSTRACTS*, 65997-17-3